# EUROPEAN PATENT SPECIFICATION

(11) **EP 3 577 008 B1**
(45) Date of publication and mention of the grant of the patent: **05.04.2023**
(21) Application number: 18747591.8
(22) Date of filing: 01.02.2018
(51) Int. Cl.: B62B 1/26, B62B 1/00, B62B 1/10, B62B 1/18, B62B 1/24, A45C 5/14

(54) **WHEEL AXLE ASSEMBLY WITH STABILIZING BRACES**
RADACHSENANORDNUNG MIT STABILISIERUNGSKLEMMEN
ENSEMBLE ESSIEU DE ROUES À ENTRETOISES DE STABILISATION

(30) Priority: 01.02.2017 US 201762453480 P; 24.07.2017 US 201715658318; 31.01.2018 US 201815885801
(43) Date of publication of application: 11.12.2019
(73) Proprietor: Carter, Mark C., Norco, California 92860 (US)
(72) Inventor: Carter, Mark C., Norco, California 92860 (US)
(74) Representative: Barker Brettell LLP
(86) International application number: PCT/US2018/016482
(87) International publication number: WO 2018/144753

(56) References cited:
- US-A- 2 601 994
- US-A- 2 704 673
- US-A1- 2002 101 065
- US-A1- 2002 190 490
- US-A1- 2003 184 033
- US-A1- 2013 334 797
- US-A1- 2016 368 320
- US-A1- 2016 368 320

## Description

### BACKGROUND

### Field

The present invention relates to a releasable wheel assembly, and more particularly to a wheel assembly for moving objects over a terrain with additional support for a removable wheel.

### Background

Collapsible shelters may be used in various locations, such as parks, beaches, athletic events, and farmer's markets. In most cases, a collapsible shelter is used to create a covered environment. Collapsible shelters may be collapsed into a compact configuration for transportation. The ease in which these shelters expand and contract has led to widespread commercial success. Still, these shelters are relatively heavy and difficult to transport. For this reason, a carry case with handles is typically provided to improve the transportation of the shelter. In light of the weight factor, however, it may be preferable to roll the carrying case rather than carrying the carrying case.

Conventional carrying cases are equipped with small (approximately one inch) wheels that are permanently attached to the carrying case. The small wheels allow the encased shelter (e.g., the shelter encased in the carrying case) to roll along a smooth flat surface. An issue arises, however, when the encased shelter navigates an irregular terrain, such as sand or uneven pavement. A top heavy carry case can become unstable, making it difficult to roll the shelter. Moreover, the permanent wheels cannot be exchanged for different wheels, such as wheels with a larger diameter, if the terrain or conditions suggest a different set.

It is desirable for carrying cases to include an exchangeable wheel assembly that promotes movement over a variety of surfaces and terrains, and which can be easily removed when desired such that the unit may be stacked or be stored without the wheel assembly while further permitting the facile change of one set of wheels for another. Furthermore, it is desirable to add additional stability to the wheel design to improve the locomotion of the carrying case.

In US 2003/184033 A1, there is disclosed a wheeled container including a one-piece molded polymeric/copolymeric container body defined by an elongated housing closed at a first end by a bottom wall ad having an opposite second end defining an opening. A one-piece molded polymeric/copolymeric cover is pivotally connected to a peripheral edge portion of the container body second end for pivotal movement between a first closed and a second open position respectively closing and opening the container second end opening. The cover has a handle projecting substantially radially away from a longitudinal axis of the housing, and a pair of relatively spaced wheels are located at the first end of the container at a side of the housing corresponding to a side from which the handle projects. Latches are disposed substantially diametrically opposite to the handle for retaining the cover in the closed position. In US 2016/368320 A1, there is disclosed a releasable wheel assembly including a bracket having a plurality of bosses, each boss including a hole that receives an axle. A pair of wheels are mounted on the axle and a pair of locking caps fit over respective ends of the axle, the locking caps each including a clip for engaging the axle at a circumferential groove to prevent movement of the locking cap along the axle. The wheel assembly can be mounted to a carry bag or other storage unit by mounting the bracket to the storage unit, where the wheels and axle can be easily removed from the bracket. In US 2002/190490 A1, there is disclosed a golf bag including a bag body and a sliding means fixed at the bottom of the bag body. The sliding means is provided with at least one eccentric front wheel for changing direction and two fixed rear wheels whose diameter are larger than the eccentric front wheel. If required, a handle can be provided on the same side above the rear wheels at the upper end of the bag body such that the golf bag can be slanted and pulled when users grasp the upper end of the bag body or pull the handle in order to drive the rear wheels

### SUMMARY

The present invention is directed to a releasable wheel assembly as defined in Claim 1.

A carry bag for carrying objects for use with the present invention is also disclosed. The carry bag includes a flexible material forming a case. The case includes a zippered opening.

Additional features and advantages of the invention will be described below. It should be appreciated by those skilled in the art that this disclosure may be readily utilized as a basis for modifying or designing other structures for carrying out the same purposes of the present invention.

### BRIEF DESCRIPTION OF THE DRAWINGS

None of FIGURES 1 - 5 form part of the present invention.
FIGURE 1A is a front view of a carrying case incorporating a wheel assembly.
FIGURE 1B illustrates an example of a collapsible stabilizer.
FIGURE 2 is an enlarged perspective view of a wheel assembly.
FIGURE 3 is a cross-sectional view of a wheel and locking cap
FIGURE 4 is an exploded view of a wheel assembly.
FIGURE 5 is a front view, partially in shadow, of a locking cap.
FIGURE 6 illustrates an example of a bottom-up view of a wheel assembly.
FIGURES 7A, 7B, 8A, 8B, 8C, and 8D illustrate examples of a carrying case incorporating a wheel assembly.
FIGURES 9, 10, 11A, 11B, and 12 illustrate examples of a wheel assembly, with FIGURES 10-12 being exemplary embodiments.

### DETAILED DESCRIPTION

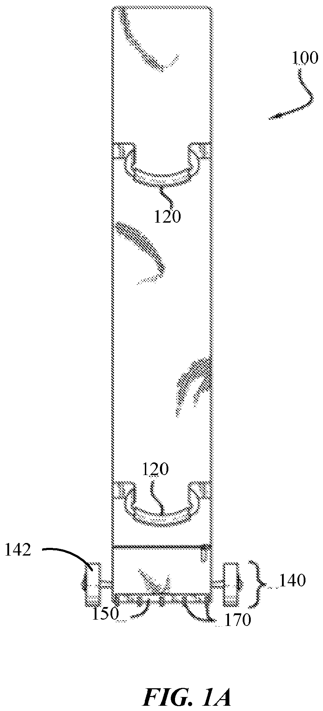

FIGURE 1A depicts a case 100 for a collapsible shelter, not forming part of the invention. The case 100 may include handles 120 along with a zippered opening along a top surface or bottom surface, although other closure means are possible. In addition, while shown in generally a rectangular profile, the case 100 may take a number of different shapes and sizes. Along a bottom edge of the case 100 is a wheel assembly 140 with wheels 142 that can be affixed to and released from the case 100 as needed, using a release system as described more fully below. It is to be understood that while a two-wheeled assembly 140 is illustrated, other wheel counts, particularly three and four wheeled variants, are also possible.

As shown in FIGURE 1A, the wheel assembly 140 may include a stabilizer 150 on the opposite side of a vertical portion of a rear bracket (not shown in FIGURE 1A) of the wheel assembly 140. The stabilizer 150 may include small legs 170 or other projections that offset the inclination of the carrying case 100 due to the presence of the wheel assembly 140. The stabilizer 150 establishes an optimum angle of inclination of the carry case 100 when the wheel assembly 140 is in place to improve the tilting of the carrying case for rolling. That is, the stabilizer 150 can offer a tilt, such as a 10 to 20 degree tilt, of the carrying case 100. Accordingly, the stabilizer 150 assists in maintaining the carrying case 100 in an upright position while improving a transition from the upright position to a tilted position for moving the carrying case 100. In one configuration, the stabilizer 150 is attached to the case 100 and is not a structure of the wheel assembly 140.

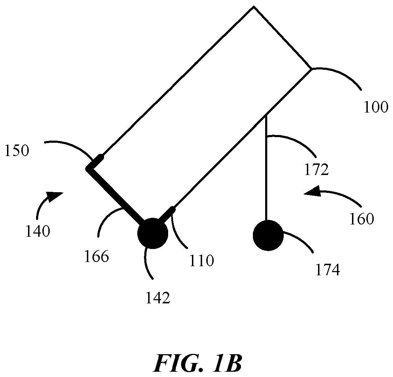

For additional stability, a collapsible stabilizer 160 may be defined on a same side as the vertical surface of the wheel assembly 140 (e.g., a side opposite to a side with a stabilizer 150). FIGURE 1B illustrates a side view of the carrying case 100 with the collapsible stabilizer 160, not forming part of the invention. As shown in FIGURE 1B a wheel assembly 140 is attached to the carrying case 100. The wheel assembly 140 includes the stabilizer 150, a base 166, multiple wheels 142, and a rear bracket 110. In one configuration, the collapsible stabilizer 160 provides additional stability when the carrying case is in a tilted angle. That is, a leg 172 of the collapsible stabilizer 160 may extend outward and may include one or more wheels 174. The collapsible stabilizer 160 may be coupled to the wheel assembly 140, a bracket of the wheel assembly 140, or another component of the case 100 and/or wheel assembly 140. Furthermore, the collapsible
stabilizer 160 may be telescopic such that the leg 172 may be retractable. The example of FIGURE 1B is not to scale and is for illustrative purposes.

In one configuration, the collapsible stabilizer is attached to the vertical surface of the rear bracket via attachment rods. The collapsible stabilizer may also be attached to the carrying case. In one configuration, a cross bar is attached to the attachment rods. The collapsible stabilizer may include one or more legs. Each leg may be attached to one or more wheels. Alternatively, two legs may be attached to one wheel. Of course, other wheel and leg combinations are also contemplated. The one or more legs may be attached to the cross bar or may be attached to another structure. In one configuration, when in a collapsed position, the collapsible stabilizer may be retracted to be substantially flush with a vertical surface of the carrying case. The collapsible stabilizer may be detachable.

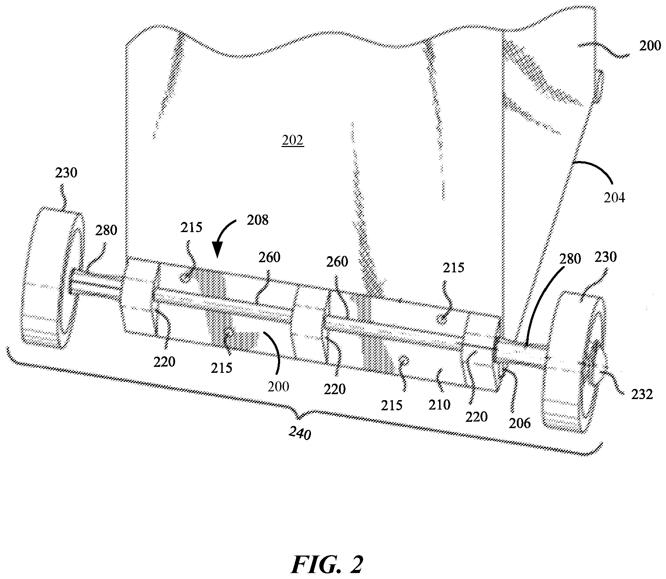

The wheel assembly includes a rear bracket. The rear bracket may be referred to as an "L"-shaped bracket. FIGURE 2 illustrates an example of a vertical portion 210 of the rear bracket 208 of a wheel assembly 240, not forming part of the invention. As shown in FIGURE 2, the vertical portion 210 may be attached to a bottom portion of the case 200 via attachment structures 215 (e.g., fasteners). As shown in FIGURE 2, a bottom corner 206 of the case 200 may rest against the vertical portion 210 and horizontal portion of the rear bracket 208. The attachment structures 215 may be rivets, snaps, sewn stitches, ties, or other like structure for attaching the rear bracket 208 to the case 200.

In one configuration, the case 200 is permanently attached to the rear bracket 208. In this configuration, the attachment structures 215 are rivets or other type of connectors with increased strength. The rear bracket 208 may include multiple holes (e.g., eyelets) that permit the rivets to pass through and cooperate with matching holes on the surface of the case 200. For a detachable coupling, the vertical portion 210 may be fastened to the case 200 via an appropriate structure (snaps, locking tabs, etc.).

Although not shown in FIGURE 2, the rear bracket includes a horizontal portion attached to the vertical portion 210. In one configuration, a portion of the case 200 attaches to the rear bracket's horizontal portion and vertical portion 210 in a complementary manner. The case 200 includes a bottom horizontal surface 204 and a vertical surface 202. In one configuration, the rear bracket 208 is attached to the case 200 via both the horizontal portion and vertical portion 210 using attachment structures 215.

The vertical portion 210 is formed with a plurality of bosses 220 to carry the axle 260 of the wheel assembly 240. The bosses 220 may have a triangular profile with a rounded vertex. In one configuration, each boss 220 is equally spaced apart along the vertical portion 210. The bosses 220 may be substantially congruent. Although, each boss 220 may also have a different thickness. Each boss 220 includes a hole to accommodate the axle 260. Each hole may be aligned collinearly with the holes of the other bosses 220. Thus, a single axle 260 can pass through the plurality of bosses 220 in such a manner that the axle 260, when disposed in the bosses 220, is substantially parallel to an edge of the case 200. Rather, the bosses 220 are provided to support the axle 260. The bosses 220 improve the stability of the axle 260 to reduce a wobble. The bosses 220 also protect the axle 260 from damage from the environment.

In one configuration, a spacer 280 is placed over each end of the axle 260. Each spacer 280 may be defined over the axle 260 between each wheel 230 and an edge of the vertical portion 210. As shown in FIGURE 2, each spacer 280 is defined between each outermost boss 220 and wheel 230. The spacers 280 reduce transverse displacement of the axle 260 when in use. The spacers 280 may be cylindrical sleeves with an inner diameter that is greater than the diameter of the axle 260. Furthermore, the spacers 280 may be of a predefined length, such that when both spacers 280 are placed on the axle 260, the axle 260 has enough remaining length to support a wheel 230 and a locking end cap 232 at each end of the axle 260. After the spacers 280 are placed on the axle 260, two or more wheels 230 may be placed on the axle 260 for rotational movement thereabout. The spacers 280 center the wheels 230, with respect to the case 200, to improve stability when the case is pulled over both smooth and rough surfaces, such as asphalt, sand, gravel, dirt, etc. That is, the wheels 230 improve the rolling of the case 200 over various surfaces.

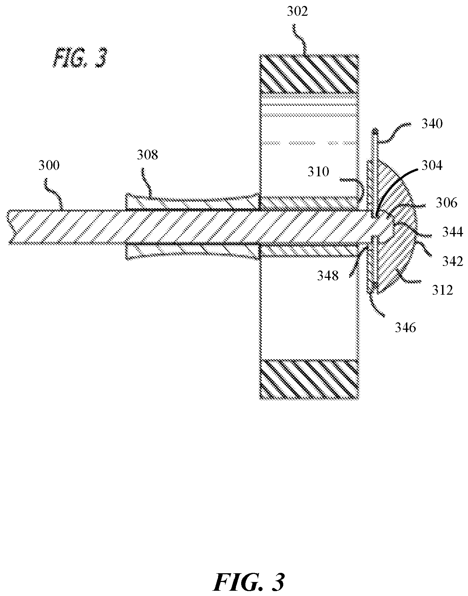

To secure the wheels to the axle, each end of the axle may include a circumferential groove. FIGURE 3 illustrates a cross-sectional view of the end of an axle 300 and a wheel 302, not forming part of the invention. As shown in FIGURE 3, the axle 300 includes a circumferential groove 304. The circumferential groove 304 may be at a specific distance, such as approximately 1.27-2.54 cm (1/2" - 1"), from the end of the axle 300. The circumferential groove 304 establishes a reduced radial dimension when compared with the adjoining sections of the axle 300. In one configuration, the tips on the end of the axle 300 adjacent the circumferential groove 304 terminate in a frusto-conical element 306 that tapers at the end of the axle 300.

When the wheels 302 and the spacers 308 are both mounted on the axle 300, the circumferential groove 304 and the frusto-conical element 306 are exposed adjacent the wheel hub 310. The locking cap 312 may be placed over the frusto-conical element 306 and the circumferential groove 304 to lock the wheel 302 on the axle 300. With each wheel 302 in place and locked on the axle 300, the case may be rolled over a surface, such as, for example, from a vehicle to a beach or grassy park. In one configuration, when the wheel assembly is no longer needed, one or more of the locking caps 312 can be removed to remove a corresponding wheel 302 and a corresponding spacer 308. The axle 300 may be slid through the bosses of the rear bracket to disassemble a portion of the wheel assembly from the case. When the axle 300 is removed, the case may be stored in a more compact configuration without the wheels 302 taking up space. Additionally, different types of wheels can be exchanged and replaced with little effort by disassembling the axle and exchanging one set of wheels for another.

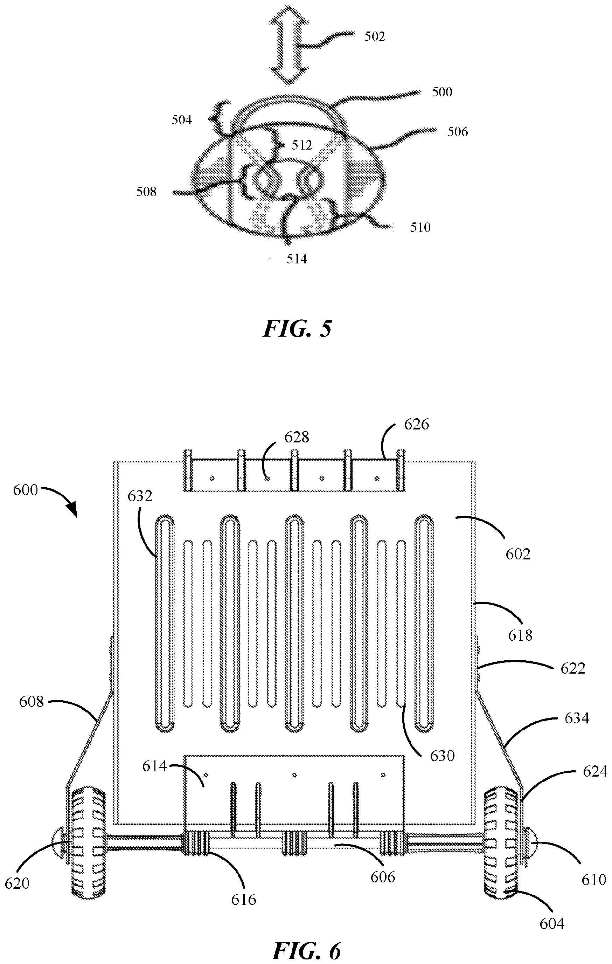

In one configuration, the locking caps 312 engage the axle 300 at the circumferential groove 304 using a two-stage clip 340 having two sections or stages, an interfering part and a non-interfering part (*see* FIGURE 5). When the non-interfering (first stage) part is centered within the locking cap 312, the wire or bar that forms the semi-circular portion does not engage the circumferential groove 304 on the axle 300, permitting the locking cap 312 to slide over (and off) the axle 300.

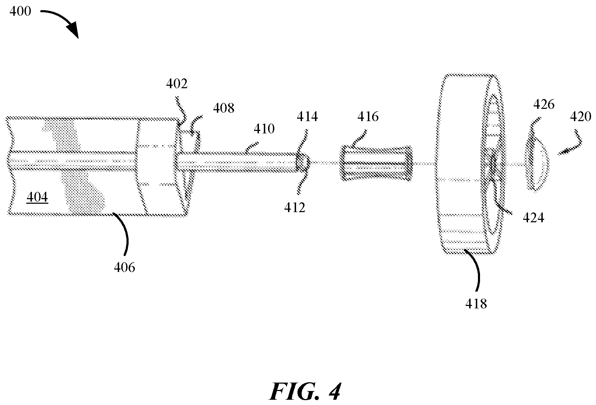

Furthermore, when the spacers 308 and wheels 302 are mounted on the axle 300, the locking caps 312 may be placed over the frusto-conical elements 306 of the axle 300 such that each clip 340 is aligned over the circumferential groove 304. With the locking cap 312 placed over the frusto-conical elements 306, the clip 340 may be pushed or otherwise urged from the larger, semi-circular portion of the clip 340 over the circumferential groove 304 to the narrower, necked, pinched, or smaller diameter portion of the clip 340 being centered within the locking cap 312 (*see* FIGURE 5). The clip 340 may slip into the circumferential groove 304 and about the axle 300 at its reduced radius, preventing the locking cap 312 from sliding along the axle 300. If the fit between the clip 340 and the groove 304 is sufficiently tight, the clip 340 secures the locking cap 312 onto the axle 300 at the circumferential groove 304 (*see* FIGURE 4).

To disassemble the wheel assembly, the two-stage clip 340 may be pulled or otherwise transitioned from the narrow or smaller diameter portion being centered over the axle 300 to the larger diameter portion (in the direction of arrow 502 of FIGURE 5), disengaging the clip 340 from the circumferential groove 304 on the axle 300. In a preferred embodiment, the clip 340 is transitioned by simply pushing an upper portion or a lower portion of the clip 340 that extends out of the locking cap 312 until the proper stage of the clip 340 is engaged or disengaged with the circumferential groove 304 on the axle 300. Once the locking cap 312 is disengaged, the locking cap 312 can be slid off the axle 300 and the spacer 308 and the wheel 302 may be removed. Then, the axle 300 may be removed from the bracket by sliding the axle 300 out of the bosses. The wheels 302, spacers 308, and locking caps 312 may be stored separately from the roller bag/carrying case, conserving space when compared with the assembled configuration. In the present application, the roller bag may be referred to as a carrying case and/or a bag.

As shown in FIGURE 3, the locking caps 312 may include a dome-shaped hub cap section 342 to cover the end of the axle 300. The dome-shaped hub cap section 342 may include a frusto-conical aperture 344 sized to receive the mating end of the axle 300 so as to center the locking cap 312 on the axle 300 and establish the correct placement of the clip 340 over the circumferential groove 304 when the mating frusto-conical elements 306 are fully engaged. The locking cap 312 may further include a face plate 346 that bears against an outer portion of the hub 310 of the wheel 302 when the locking cap 312 is locked on the axle 300 to prevent the wheel 302 from drifting on the axle 300. The face plate 346 may include a hole 348 for the axle 300 to pass through and enter the aperture 344 on the hub cap section 342. The face plate 346 and the hub cap 342 may be connected in such a manner that the clip 340 enters the path of the axle 300 as it moves from the face plate 346 to the hub cap 342. This can be achieved, for example, by arcuate connectors (not shown) above and below the hole 348 in the face plate 346 that connect the face plate 346 to the hub cap 342. The arcuate connectors may include gaps between the clip's narrow section to intercede and engage the circumferential groove 304 when needed to lock the end cap 312 on the axle 300.

FIGURE 4 illustrates an example of portions of the wheel assembly 400 that have been disassembled. As shown in FIGURE 4, which does not form part of the invention, the axle 410 passes through a hole of a boss 402. As previously discussed, the boss 402 may be defined on a vertical portion 404 of a rear bracket 406. The rear bracket 406 further includes a horizontal portion 408. The axle 410 includes a circumferential groove 414 and a frusto-conical element 412. A spacer 416 may be placed over the axle 410, such that the spacer 416 is defined between the outermost boss 402 and the wheel 418. An end cap 420 may engage the end of the axle 410 by securing the end cap 420 to the axle 410 via a pin 426 that engages the groove 414. The end cap 420 is placed adjacent to the wheel hub 424.

In one configuration, the clip on the locking cap is a metal rod that is bent or otherwise formed into the two-stage clip. Still, the clip may take other forms, such as a plate having a cutout of the shape needed to engage and disengage the axle. The clip may be held between the dome-shaped hub cap and the face plate. Furthermore, the clip may be linearly moved from a first position (e.g., disengaged) to a second position (e.g., engaged). Nonetheless, the clip may be otherwise captured between the two portions of the locking cap.

FIGURE 5 illustrates an example of a clip 500, not forming part of the invention. In one configuration, when the clip 500 is in the engaged position, the upper section 504 of the clip 500 protrudes beyond the face plate (not shown in FIGURE 5) and the end cap 506. A user may push down on the upper section 504 of the clip 500 in a direction of an arrow 502 to force a narrow portion 508 of the clip 500 off the circumferential groove of the axle, thereby disengaging the clip 500 from the axle. When the upper section 504 is pushed down, the lower portion 510 of the clip 500 may be exposed on a side of the end cap 506 that is opposite to the upper portion 504. In the present application, the end cap may be referred to as a locking cap or a cap. Furthermore, a larger diameter section 512 may be about the axle. As shown in FIGURE 5, the axle would pass through a hole 514 of the cap 506.

Additionally, the clip 500 may be engaged by pushing the lower section 510 in a direction 502 so that the clip 500 engages the axle at the circumferential groove, thereby locking the cap 506 while exposing the upper section 504 on a side of the cap 506 that is opposite to the lower portion 510. In this manner, the cap 506 may be engaged and disengaged with the axle by manually pushing on the exposed portion of the clip 500. A fit between the clip 500 and the circumferential groove should be of a sufficient character to engage the clip 500. When the clip 500 is engaged with the axle, the likelihood of the cap 506 being disengaged when the case is rolled over rough or uneven terrain is reduced.

In one configuration, a brace is provided to improve the stability to the wheel assembly. FIGURE 6 illustrates an example of a bottom-up view of a wheel assembly 600 with stabilizing braces 608, not forming part of the invention. As shown in FIGURE 6, the wheel assembly 600 includes a base 602, wheels 604, an axle 606, and braces 608. The base 602 engages with a horizontal portion 614 of the bottom of the rear bracket. The base 602 also engages with a stabilizer 626. The rear bracket and the stabilizer 626 may be a different material than the base 602. For example, the base 602 may be a type of metal and the rear bracket and the stabilizer 626 may be a type of plastic, carbon fiber, or other type of non-metal material. Of course, the base 602, rear bracket, and stabilizer 626 may be the same type of material.

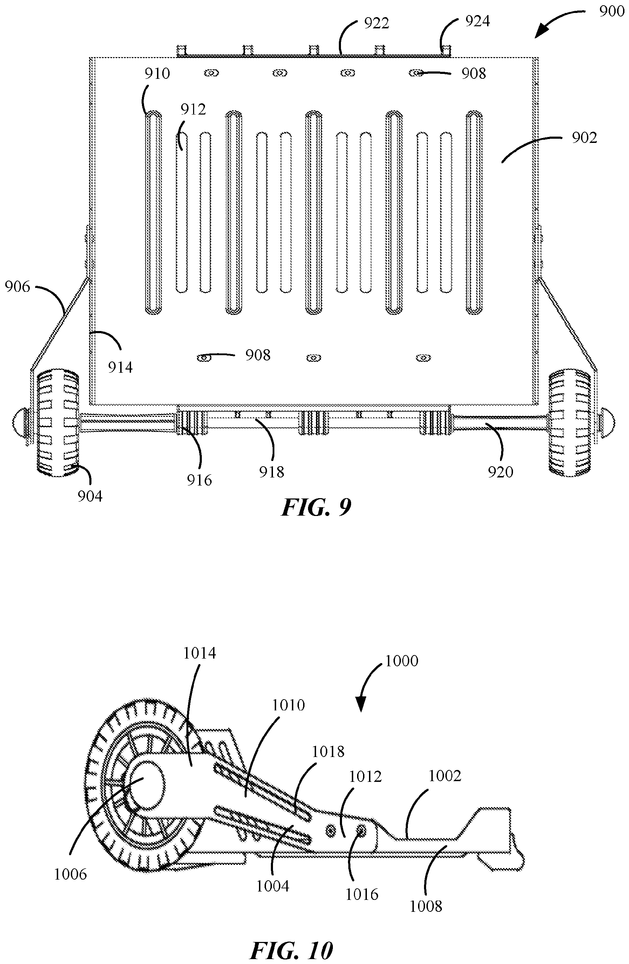

As previously discussed, the rear bracket is attached to a first bottom edge of the bag via an attaching structure, such as rivets, snaps, sewn stitches, ties, or other attaching structure. The stabilizer 626 may also be attached to a second bottom edge, opposite of the first bottom edge, of the bag via an attaching structure, such as rivets, snaps, sewn stitches, ties, or other attaching structure. The bag may be attached to the stabilizer 626 and a horizontal portion 614 of the bottom of the rear bracket via eyelets 628. The eyelets 628 may also be used for attaching structures that respectively couple the stabilizer 626 and the rear bracket to the base 602. In one configuration, the first bottom edge of the roller bag rests on top of the base 602. The top of the base 602 is a side that is opposite to the side shown in FIGURE 6. An example of the top of the base 602 is shown in FIGURE 9. In the present application, a case (e.g., carrying case) may be referred to as a roller bag.

As shown in FIGURE 6, a first end 622 of the brace 608 is coupled to a side wall 618 of the base 602 and a second end 624 of the brace 608 is coupled with the axle 606. Specifically, the brace 608 may be coupled to the axle 606 and secured between a hub of the wheel 604 and a locking end cap 610. A washer 620 may be defined between the hub of the wheel 604 and an end of the brace 608. Furthermore, the wheel 604 may be defined in a space between side wall 618 and the brace 608. In one configuration, a middle portion 634 of the brace 608 tapers outwards from the first end 622 to the second end 624. The tapering provides a space for the wheel 604.

As previously discussed, the axle 606 is stabilized by the bosses 616. The braces 608 are added to the wheel assembly 600 to further improve the stability of the axle 606 by reducing a jitter of the axle 606. The improved stability of the axle 606 improves the stability of the wheels 604, thereby improving the stability of the case when the case is carried over various terrains.

As shown in FIGURE 6, dimples 632 may be defined in the base 602. The dimples 632 may also be referred to as pressing grooves, beads, or ribs. The dimples 632 may be substantially equally distanced from each other and may be of similar lengths. The dimples 632 increase the strength of the base 602. That is, each dimple 632 compounds the strength of the base 602. Furthermore, the dimples 632 may add to the aesthetics of the base 602.

In one configuration, the base 602 also includes slotted holes 630. The slotted holes 630 may mitigate expansion of the base 602 due to changes in temperature (e.g., environment) and may reduce the weight of the base 602. The base 602 may also be referred to as a plate or a base plate. The slotted holes 630 may also add to the aesthetics of the base 602. The slotted holes 630 may be of similar length. As shown in FIGURE 6, two slotted holes 630 are defined between each dimple 632. Furthermore, the length of the dimples 632 may be greater than the length of the slotted holes 630. More or fewer dimples 632 and/or slotted holes 630 may be defined. Furthermore, the lengths of the dimples 632 and/or slotted holes 630 may be different from the lengths illustrated in FIGURE 6.

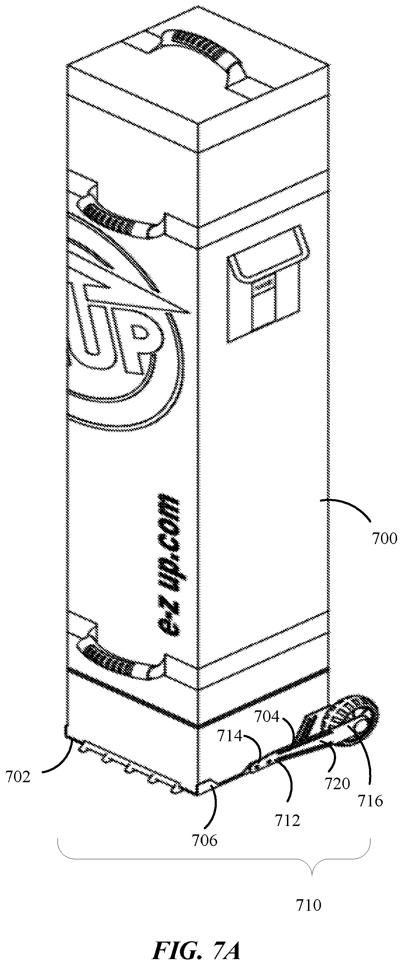

As previously discussed, the base of the wheel axle assembly may be used to carry a bag (e.g., case) for a portable shelter or other object. The base and/or rear bracket may be attached to the bag via one or more types of structures. FIGURE 7A illustrates an example of a bag 700 disposed on a base 702 of a wheel assembly 710. As shown in FIGURE 7A, the roller bag 700 is placed on top of the base 702. In one configuration, the base 702 is attached to the bag 700 via one or more types of structures.

Additionally, a stabilizing brace 704 is defined to be connected to a side wall 706 of the base 702 and the end of an axle. That is, a first end 712 of the brace 704 is attached to the side wall 706 of the base 702 via an attaching structure 714, such as bolts, rivets, fasteners, and/or other attaching structures. A second end 716 of the brace 704 is attached to the axle (not shown). As previously discussed, the end of the axle may be covered by an end cap. The second end 716 may include a hole (not shown) for the axle to pass through. The second end 716 is secured between the end cap and the wheel hub. In one configuration, the width of the first end 712 is less than the width of the second end 716. The widths may be different to accommodate the different widths of the side wall and axle. A middle portion 720 tapers outward between the first end 712 and the second end 716. The width of the middle portion 720 expands to accommodate the different widths of the first end 712 and the second end 716.

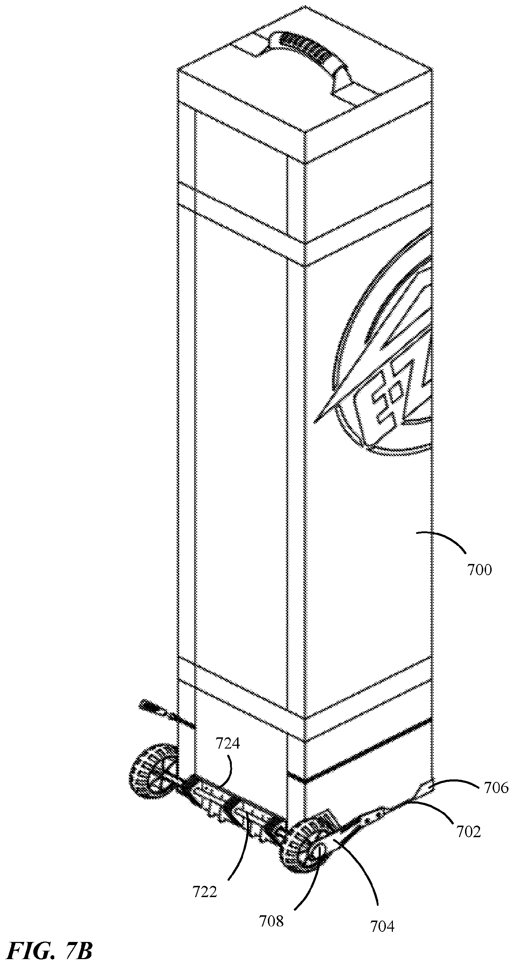

FIGURE 7B illustrates an example of a bag 700 placed on the base 702 of a wheel assembly. As shown in FIGURE 7B, the bottom of the bag 700 is connected to a top of the base 702. The bag 700 is also connected to a vertical portion of the rear bracket 724. The brace 704 is defined to be connected to a side wall 706 of the base 702 and the end of an axle 722. The end cap 708 is placed at the end of the axle 722.

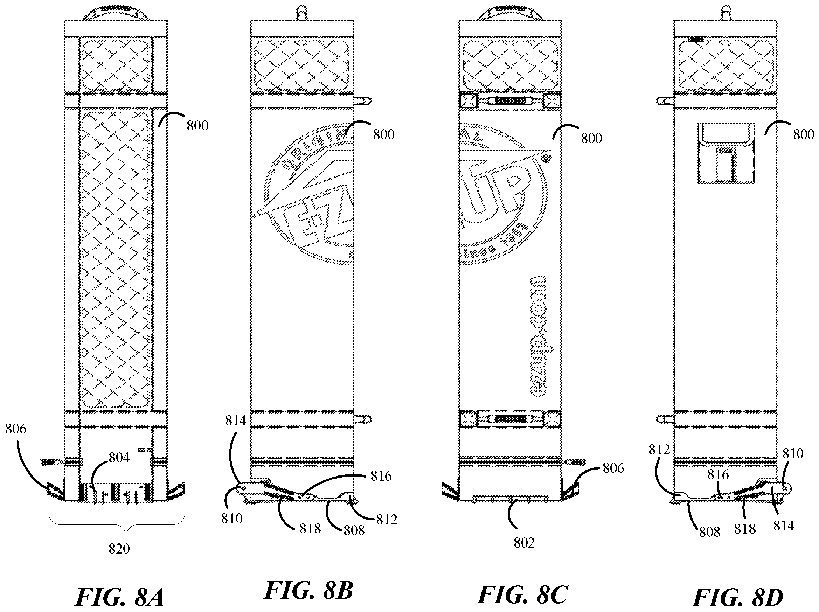

FIGURE 8A illustrates an example of a back view of bag 800 disposed on top of a base of a wheel assembly 820, not forming part of the invention. As shown in FIGURE 8A, a vertical surface 804 of the rear bracket of the wheel assembly may be fastened to the roller bag 800. Additionally, braces 806 may flare out from a side wall of the base (not shown). As previously discussed, a wheel may be defined between the brace 806 and the side wall of the base.

FIGURES 8B and 8D illustrate examples of a side view of roller bag 800 placed on top of a base of a wheel assembly, not forming part of the invention. In one configuration, a base 808 of the wheel assembly is fastened to the roller bag 800. Additionally, braces 806 may be connected to a side wall 812 of the base 808. As shown in FIGURES 8B and 8D, a first end 816 of the brace 806 is attached to the side wall 812 of the base 808. A middle portion 818 of the brace 806 may be defined at an angle between the first end 816 and a second end 814 of the brace 806. In one configuration, a hole 810 is defined at a second end 814 of the brace 806. The axle (not shown) may pass through the hole 810 of the brace 806.

FIGURE 8C illustrates an example of a front view of bag 800 placed on top of a base of a wheel assembly, not forming part of the invention. As shown in FIGURE 8C, a stabilizer 802 may be defined in front of the roller bag 800. Additionally, braces 806 may flare out from a side wall of the base (not shown). As previously discussed, a wheel may be defined between the brace 806 and the side wall of the base.

FIGURE 9 illustrates an example of a top-down view of a wheel assembly 900. As shown in FIGURE 9, the wheel assembly 900 includes a base 902 and braces 906. A bottom of a bag (not shown) rests on top of the base 902. The base 902 may include eyelets 908 for receiving an attaching structure, such as bolts, rivets, fasteners, and/or other structures for fastening the base 902 to the case. The eyelets 908 may also be used for attaching the base 902 to the stabilizer or a horizontal portion of a rear bracket. In one configuration, dimples 910 may be defined in the base 902. The dimples 910 may also be referred to as pressing grooves, beads, or ribs. The dimples 910 may be substantially equally distanced from each other and may be of similar lengths. The dimples 910 increase the strength of the base 902. That is, each dimple 910 compounds the strength of the base 902. Furthermore, the dimples 910 may add to the aesthetics of the base 902. In one configuration, the base 902 also includes slotted holes 912. The slotted holes 912 may mitigate expansion of the base 902 due to changes in temperature (e.g., environment). The slotted holes 912 may also add to the aesthetics of the base 902.

The base 902 is a top portion of the wheel assembly 600 as shown in FIGURE 6. As shown in FIGURE 9, wheels 904 are defined in a space between a side wall 914 of the base 902 and the brace 906. The wheel assembly 900 also includes bosses 916 to carry an axle 918. Spacers 920 may be defined between each outermost boss 916 and an adjacent wheel 904. The stabilizer 922 is also visible from the top-down view of FIGURE 9. The stabilizer 922 may include small legs 924 that extend outward from the base 902 and stabilizer 922. The small legs 924 may prevent damage to the base 902 from colliding with other objects. The small legs 924 (e.g., teeth) may also offset the inclination of the bag due to the presence of the wheel assembly 900.

FIGURE 10 illustrates an example of a side view of a wheel assembly 1000 according to exemplary embodiment. As shown in FIGURE 10, a base 1002 of the wheel assembly 1000 is defined to hold a bag (e.g., roller bag). Additionally, braces 1004 are connected to a side wall 1008 of the base 1002. The side wall 1008 of the base 1002 is substantially perpendicular to the horizontal base 1002. A middle portion 1010 of brace 1004 is defined at an angle between a first end 1012 of the brace 1004 and a second end 1014 of brace 1004. Slots 1018 are defined in the middle portion 1010 of the brace 1004. The slots 1018 may mitigate expansion/contraction due to changes in temperature and may reduce the weight of the brace 1004. The slots 1018 may also increase the aesthetics of the wheel assembly 1000.

The axle (not shown) passes through a hole (not shown) of the second end 1014 of the brace 1004. The end cap 1006 is attached to the end of the axle. The first end 1012 of the brace 1004 is connected to the side wall 1008 of the base 1002 via attaching structures 1016, such as bolts, rivets, fasteners, and/or other structures for fastening. As previously discussed, the brace 1004 provides additional stability to the wheel assembly 1000 and a roller bag.

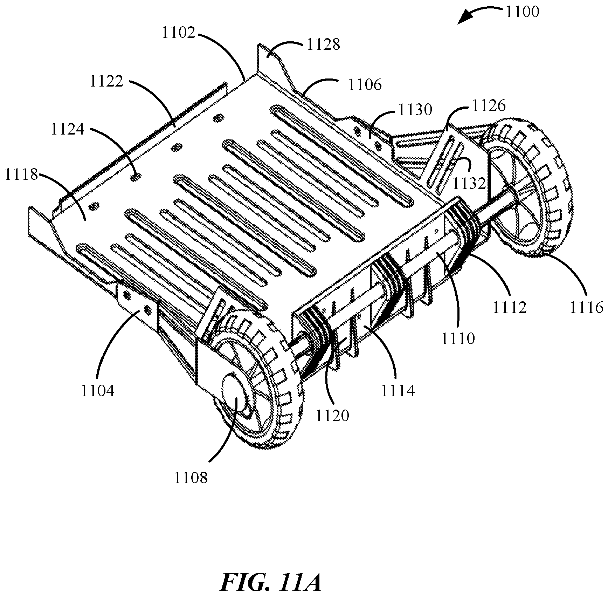

FIGURE 11A illustrates an example of a wheel assembly 1100 according to another embodiment. As shown in FIGURE 11A, a base 1102 of the wheel assembly 1100 is provided to hold a bag. That is, a bag, such as a bag for holding a collapsible canopy, is attached to the base 1102. Additionally, braces 1104 are connected to a side wall 1106 of the base 1102. The side wall 1106 of the base 1102 is perpendicular to the horizontal portion 1118 of the base 1102. A portion of the brace 1104 is defined at an angle between the side wall 1106 of the base 1102 and the end cap 1108 of an axle 1110.

The wheel assembly 1100 includes bosses 1112 to carry an axle 1110 of the wheel assembly 1100. As previously discussed, a rear bracket 1120 that is coupled to the base 1102 includes a vertical portion 1114 and a horizontal portion (not shown). The rear bracket 1120 is attached to a bag via attaching structures. A stabilizer 1122 is defined at a front of the base 1102. The stabilizer 1122 is attached to the bag via attaching structures through the eyelets 1124. As shown in FIGURE 11A, wheels 1116 are defined on the axle 1110 between a brace 1104 and a side wall 1106 of the base 1102.

A back portion 1126 of the side wall 1106 has a greater height than a front portion 1128. A brace attaching portion 1130 of the side wall 1106 between the back portion 1126 and the front portion 1128 has a height that is less than both the back portion 1126 and the front portion 1128. The brace attaching portion 1130 extends upwards to provide an area to attach the side wall 1106 with the brace 1104. Slots 1132 are defined in the back portion 1126 of the brace 1104. The slots 1132 may mitigate expansion/contraction due to changes in temperature and may reduce the weight of the brace side wall 1106. The slots 1132 may also increase the aesthetics of the wheel assembly 1000.

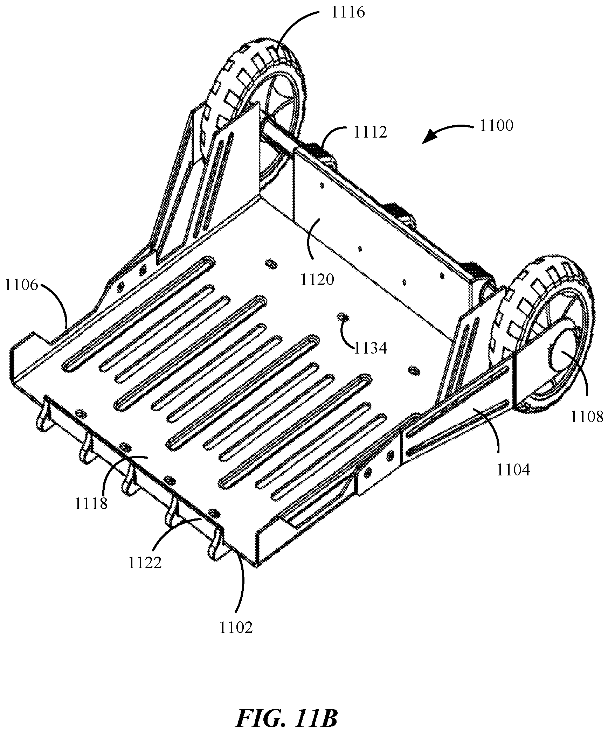

FIGURE 11B illustrates an example of the wheel assembly 1100 according to another embodiment. As shown in FIGURE 11B, the base 1102 of the wheel assembly 1100 is provided to hold a bag. Additionally, the braces 1104 are connected to the side wall 1106 of the base 1102. The side wall 1106 of the base 1102 is perpendicular to the horizontal portion 1118 of the base 1102. A portion of the brace 1104 is defined at an angle between the side wall 1106 of the base 1102 and the end cap 1108 of an axle 1110.

The wheel assembly 1100 includes bosses 1112 to carry an axle of the wheel assembly 1100. As previously discussed, the rear bracket 1120 includes a horizontal portion (not shown) and a vertical portion 1114. The rear bracket 1120 is attached to the bag through both the horizontal portion and the vertical surface 1114 using attaching structures. The horizontal portion of the rear bracket 1120 is attached to the bag via eyelets 1134. As shown in FIGURE 11B, wheels 1116 are defined on the axle between a brace 1104 and the side wall 1106 of the base 1102. Furthermore, a stabilizer 1122 is defined on the opposite side of the vertical surface 1114.

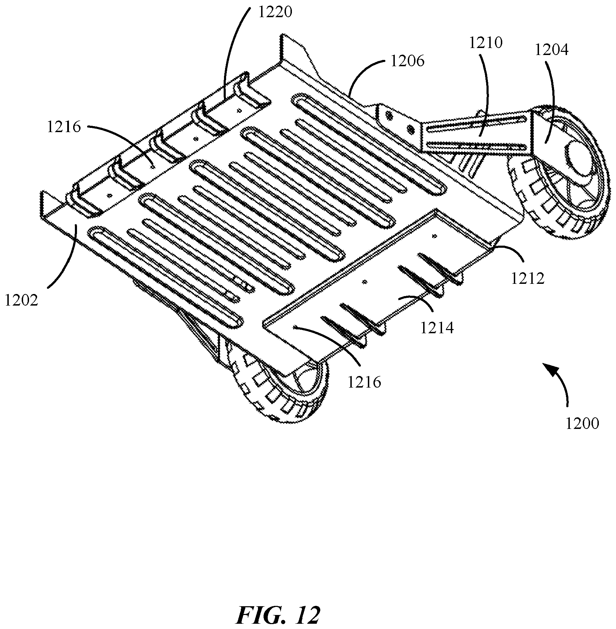

FIGURE 12 illustrates an example of a wheel assembly 1200 according to another embodiment. As shown in FIGURE 12, a base 1202 of the wheel assembly 1200 is provided to hold a bag. The bag is placed on top of the portion of the base 1202 that is opposite to a side of the base 1202 shown in FIGURE 12. The side of the base 1202 shown in FIGURE 12 may be referred to as the bottom side of the base. Additionally, braces 1204 are connected to a side wall 1206 of the base 1202. As shown in FIGURE 12, a middle portion 1210 of the brace 1204 extends outwards from the side wall 1206 of the base 1202.

As previously discussed, a rear bracket 1212 is coupled to the base 1202. The rear bracket 1212 includes and a vertical surface (not shown) and a horizontal portion 1214. The horizontal portion 1214 is attached to the bag via attaching structures. The attaching structures are attached through the eyelets 1216. The horizontal portion 1214 is attached to the base 1202 with attaching structures through the eyelets 1216. Furthermore, a stabilizer 1220 is defined on the opposite side of a vertical surface. The stabilizer 1220 is attached to the bag via attaching structures. The attaching structures are attached through the eyelets 1216. The stabilizer 1220 may also be attached to the base 1202 with attaching structures through the eyelets 1216.

The invention may be embodied in other forms without departure from the benefits and characteristics described. The embodiments described therefore are to be considered in all respects as illustrative and not restrictive. Although the present invention has been described in terms of certain preferred embodiments, other embodiments that are apparent to those of ordinary skill in the art are also within the scope of the claims.

## Claims

1. A releasable wheel assembly (1000, 1100, 1200) comprising:
a base plate (1002, 1102, 1202) comprising a pair of side walls (618, 706, 914, 1008, 1106, 1206), wherein each side wall of the pair of side walls (618, 706, 914, 1008, 1106, 1206) is defined on one side of the base plate (1002, 1102, 1202);
a bracket (1120, 1212) coupled to the base plate, the bracket comprising a plurality of bosses (1112), each boss comprising a hole;
an axle (1110) passing through the hole of each boss, the axle including a pair of circumferential grooves (414), wherein each circumferential groove is adjacent to a respective end of the axle;
a pair of wheels (1116) on the axle (1110), the axle (1110) extending through a hub on each wheel (1116);
a pair of locking caps (1006), each locking cap fitting over an end of the axle (1110), and each locking cap (1006) comprising a clip for engaging the axle (1110) at the circumferential groove; and **characterised by**,
a pair of braces (608, 704, 806, 902, 1004, 1104, 1204), wherein the pair of braces (1004) are symmetrical,
wherein each brace (608, 704, 806, 1004) of the pair of braces (608, 704, 806, 902,1004, 1104, 1204) comprises:
a first end (622, 712, 816, 1012) coupled to a respective side wall of the pair of side walls (618, 706, 914, 1008, 1106, 1206) of the base plate (1002);
a second end (624, 716, 814, 1014) coupled to the axle (1110) between one wheel of the pair of wheels (1116) and one locking cap of the pair of locking caps (1006);
and
a middle portion (634, 720, 818, 1010, 1210) defined at an angle between the second end (624, 716, 814, 1014) and the first end (622, 712, 816, 1012), the middle portion (634, 720, 818, 1010, 1210) extending outward from the base plate (1002), and at an upward angle from the first end (622, 712, 816, 1012) to the second end (624, 716, 814, 1014).

2. The releasable wheel assembly of claim 1, in which the second end (624, 716, 814, 1014) comprises a hole (810) for receiving one end of the axle (1110).

3. The releasable wheel assembly of claim 1, in which each locking cap (1006) comprises a clip for engaging the axle (410, 1110) at a respective circumferential groove of the pair of circumferential grooves (414).

4. The releasable wheel assembly of claim 1, further comprising a bag for carrying objects, the bag comprising a flexible material forming a case, including a zippered opening.

## Patentansprüche

1. Lösbare Radanordnung (1000, 1100, 1200), Folgendes umfassend:
eine Grundplatte (1002, 1102, 1202), die ein Paar von Seitenwänden (618, 706, 914, 1008, 1106, 1206) umfasst, wobei jede Seitenwand des Paares von Seitenwänden (618, 706, 914, 1008, 1106, 1206) auf einer Seite der Grundplatte (1002, 1102, 1202) definiert ist;
eine Klammer (1120, 1212), die mit der Grundplatte gekoppelt ist, wobei die Klammer eine Vielzahl von Vorsprüngen (1112) umfasst, wobei jeder Vorsprung ein Loch umfasst;
eine Achse (1110), die durch das Loch jedes Vorsprungs verläuft, wobei die Achse ein Paar von Umfangsnuten (414) umfasst, wobei jede Umfangsnut an ein jeweiliges Ende der Achse angrenzt;
ein Paar von Rädern (1116) auf der Achse (1110), wobei sich die Achse (1110) durch eine Nabe an jedem Rad (1116) erstreckt;
ein Paar von Verriegelungskappen (1006), wobei jede Verriegelungskappe über ein Ende der Achse (1110) passt und jede Verriegelungskappe (1006) einen Clip zum Eingreifen in die Achse (1110) an der Umfangsnut umfasst; und **gekennzeichnet durch**
ein Paar von Klemmen (608, 704, 806, 902, 1004, 1104, 1204), wobei das Paar von Klemmen (1004) symmetrisch ist,
wobei jede Klemme (608, 704, 806, 1004) des Paares von Klemmen (608, 704, 806, 902,1004, 1104, 1204) Folgendes umfasst:
ein erstes Ende (622, 712, 816, 1012), das mit einer jeweiligen Seitenwand des Paares von Seitenwänden (618, 706, 914, 1008, 1106, 1206) der Grundplatte (1002) gekoppelt ist;
ein zweites Ende (624, 716, 814, 1014), das mit der Achse (1110) zwischen einem Rad des Paares von Rädern (1116) und einer Verriegelungskappe des Paares von Verriegelungskappen (1006) gekoppelt ist;
und
einen mittleren Abschnitt (634, 720, 818, 1010, 1210), der in einem Winkel zwischen dem zweiten Ende (624, 716, 814, 1014) und dem ersten Ende (622, 712, 816, 1012) definiert ist, wobei sich der mittlere Abschnitt (634, 720, 818, 1010, 1210) von der Grundplatte (1002) nach außen und in einem Aufwärtswinkel von dem ersten Ende (622, 712, 816, 1012) zu dem zweiten Ende (624, 716, 814, 1014) erstreckt.

2. Lösbare Radanordnung nach Anspruch 1, bei der das zweite Ende (624, 716, 814, 1014) ein Loch (810) zum Aufnehmen eines Endes der Achse (1110) umfasst.

3. Lösbare Radanordnung nach Anspruch 1, bei der jede Verriegelungskappe (1006) einen Clip zum Eingreifen in die Achse (410, 1110) an einer jeweiligen Umfangsnut des Paares von Umfangsnuten (414) umfasst.

4. Lösbare Radanordnung nach Anspruch 1, ferner umfassend eine Tasche zum Tragen von Gegenständen, wobei die Tasche ein flexibles Material umfasst, das eine Hülle mit einer Reißverschlussöffnung bildet.

## Revendications

1. Ensemble de roue amovible (1000, 1100, 1200) comprenant :
une plaque de base (1002, 1102, 1202) comprenant une paire de parois latérales (618, 706, 914, 1008, 1106, 1206), dans laquelle chaque paroi latérale de la paire de parois latérales (618, 706, 914, 1008, 1106, 1206) est définie sur un côté de la plaque de base (1002, 1102, 1202) ;
un support (1120, 1212) couplé à la plaque de base, le support comprenant une pluralité de bossages (1112), chaque bossage comprenant un trou ;
un essieu (1110) passant à travers le trou de chaque bossage, l'essieu comportant une paire de rainures circonférentielles (414), dans lequel chaque rainure circonférentielle est adjacente à une extrémité respective de l'essieu ;
une paire de roues (1116) sur l'essieu (1110), l'essieu (1110) s'étendant à travers un moyeu sur chaque roue (1116) ;
une paire de capuchons de verrouillage (1006), chaque capuchon de verrouillage s'ajustant sur une extrémité de l'essieu (1110), et chaque capuchon de verrouillage (1006) comprenant une attache pour être en prise avec l'essieu (1110) au niveau de la rainure circonférentielle ; et **caractérisé par**,
une paire d'entretoises (608, 704, 806, 902, 1004, 1104, 1204), dans lequel la paire d'entretoises (1004) est symétrique,
dans lequel chaque entretoise (608, 704, 806, 1004) de la paire d'entretoises (608, 704, 806, 902, 1004, 1104, 1204) comprend :
une première extrémité (622, 712, 816, 1012) couplée à une paroi latérale respective de la paire de parois latérales (618, 706, 914, 1008, 1106, 1206) de la plaque de base (1002) ;
une seconde extrémité (624, 716, 814, 1014) couplée à l'essieu (1110) entre une roue de la paire de roues (1116) et un capuchon de verrouillage de la paire de capuchons de verrouillage (1006) ;
et
une partie médiane (634, 720, 818, 1010, 1210) définie à un angle entre la seconde extrémité (624, 716, 814, 1014) et la première extrémité (622, 712, 816, 1012), la partie médiane (634, 720, 818, 1010, 1210) s'étendant vers l'extérieur à partir de la plaque de base (1002) et formant un angle vers le haut à partir de la première extrémité (622, 712, 816, 1012) jusqu'à la seconde extrémité (624, 716, 814, 1014).

2. Ensemble de roue amovible selon la revendication 1, dans lequel la seconde extrémité (624, 716, 814, 1014) comprend un trou (810) pour recevoir une extrémité de l'essieu (1110).

3. Ensemble de roue amovible selon la revendication 1, dans lequel chaque capuchon de verrouillage (1006) comprend une attache pour être en prise avec l'essieu (410, 1110) au niveau d'une rainure circonférentielle respective de la paire de rainures circonférentielles (414).

4. Ensemble de roue amovible selon la revendication 1, comprenant en outre un sac pour transporter des objets, le sac comportant un matériau flexible formant un étui, comportant une ouverture à fermeture éclair.
